# EUROPEAN PATENT APPLICATION

(11) **EP 0 854 032 A2**
(43) Date of publication of application: **22.07.1998**
(21) Application number: 98870006.8
(22) Date of filing: 15.01.1998
(51) Int. Cl.: B32B 27/32

(54) **Multilayer packaging film**

(30) Priority: 17.01.1997 BE 9700054
(71) Applicant: RPC Cobelplast Trading N.V., 9160 Lokeren (BE)
(72) Inventor: Marynissen, Jozef, 9111 Belsele (BE); Van Iseghem, Tino, 9112 Sinaai (BE); De Groof, Benny, 1840 Londerzeel (BE)
(74) Representative: Claeys, Pierre

(57) **Abstract**

This invention relates to a multilayer packaging film comprising (i) a polyethylene outer layer, (ii) a polar polymer barrier layer, and (iii) a polyethylene inner layer, whereby the outer layer and inner layer are built up of linear medium density polyethylene. The packaging film preferably comprises, between the inner layer and the polar polymer barrier layer, a fourth layer, which may be built up of medium or high density polyethylene. The packaging film preferably comprises, between the outer layer and the polar polymer barrier layer, a fifth layer, which may be built up of medium or high density polyethylene. The invention also relates to a tube-shaped packaging obtainable from such a packaging film.

## Description

This invention relates to a multilayer packaging film comprising (i) a polyethylene outer layer, (ii) a polar polymer barrier layer, and (iii) a polyethylene inner layer.

Such multilayer packaging films are used for the manufacture of packagings for, among others, foodstuffs and personal care products. The separate polymer layers mostly have a specific function. The polymer barrier layer prevents, among others, the flavour of the packed product from diffusing outwards through the packaging, and oxygen from diffusing inwards, in order to prevent as much as possible the oxidation of the packed product. The polymer layers further provide structural properties to the film.

A packaging manufactured from such a film, for example a tube, should have a certain flexibility, so that the packaging is flexible and compressible, without showing permanent wrinkles or deflections as a result of being used. Such a packaging should also have a certain rigidity, a stability of shape and should also readopt its original shape after having been compressed.

The multilayer packaging films mentioned in the preamble, are known from EP-A-508 168. EP-A-508 168 describes a multilayer packaging film built up of an outer layer and an inner layer of low density polyethylene, with a barrier layer of an ethyl vinyl alcohol polymer in between.

The multilayer film described in EP-A-508 168 has the disadvantage of being too flexible and having a high toughness, as a result of which it is difficult to cut.

It is the aim of this invention to provide a multilayer packaging film which is suitable for the manufacturing of tubes, i.e. which is easy to cut, and shows a sufficient rigidity and simultaneously a good flexibility.

This is achieved according to the invention in that the outer and inner layers are built up of linear medium density polyethylene.

The multilayer packaging film obtainable according to the invention shows a good compromise between an appropriate toughness and improved flexibility on the one hand, and yet sufficient rigidity on the other hand, so as to guarantee a good stability of shape of packagings manufactured therefrom. Because of the optimised rigidity and toughness, the film according to the invention can be better cut than the known film. Because the multilayer packaging film obtainable according to the invention shows a good flexibility, the tube-shaped packaging manufactured therefrom will show a good squeezing behaviour, i.e. will readopt is original shape after having been used or compressed.

The term "linear polyethylene" according to the invention refers to homo- or co-polymers of ethylene having one or more comonomers from the groups of C₄ tot C₁₀ alpha olefins, such as 1-butene, octene etc., in which the co-polymer molecules are built up of long polymer chains with a small number of branches or cross-linking structures. This in contrast to the standard polyethylenes, which show a high degree of branching.

By "linear medium density polyethylene" is meant according to the invention, a linear polyethylene with a density between about 0.93 and 0.94 g/cm³. By "linear high density polyethylene" is meant according to the invention, a linear polyethylene with a density between 0.940 and 0.965 g/cm³.

From EP-A-217.596 a flexible, oriented transparant barrier film is known, which can be shrunk so that it firmly encloses the product to be packaged, and an aesthetically good looking packaging is obtained. The film described in EP-A-217,596 has a thickness of 0.013 to 0.05 µm and comprises (1) a central cross-linked layer comprising a blend of an ethylene vinyl alcohol co-polymer and a polyamide resin, and (2) two cross-linked surface layers, each comprising a three component blend of a linear low density polyethylene, a linear medium density polyethylene and an ethylene vinyl acetate co-polymer.

The multilayer packaging film according to the present invention preferably comprises, between the inner layer and the polar polymer barrier layer, a fourth layer which is built up of medium density polyethylene and/or high density polyethylene.

According to the invention, by "medium density polyethylene" (MDPE) is meant, a standard polyethylene with a density between about 0.93 and 0.94 g/cm³. According to the invention, by "high density polyethylene" (HDPE) is meant, a standard polyethylene with a density between about 0.94 and 0.965 g/cm³.

Because of the presence of a MDPE and/or HDPE layer, a relatively thin packaging film may be obtained, which can be easily cut and has a comparatively high rigidity.

Since MDPE and HDPE are raw materials that are cheaper than the more expensive LMDPE, it is possible according to the invention to obtain an economic, relatively thin packaging film with the desired properties. A packaging manufactured from such a film moreover has a good shape stability.

The thickness of the inner layer and the fourth layer together varies mostly from 15-40 %, preferably from 15-30 % of the overall thickness of the film.

In a second, particularly preferred embodiment of the invention, the multilayer packaging film comprises, between the polar polymer barrier layer and the outer layer also a fifth layer, built up of MDPE and/or HDPE.

Because of the presence of this fifth MDPE and/or HDPE layer, it is possible to further increase the rigidity of the packaging film and to improve its cuttability. Consequently, it is possible to obtain a packaging film with a smaller thickness, while maintaining the rigidity.

The thickness of the outer layer and the fifth layer together varies mostly from 40-75 %, preferably from 60-75 % of the overall thickness of the packaging film.

The thickness of the multilayer packaging film according to the invention is preferably between 180 and 400 µm, more preferably between 250 and 360 µm.

According to the invention, various polymers may be used as a polar polymer barrier layer, for example ethylene vinyl alcohol polymers, polyvinylidene chloride polymers, polyamides and polyesters.

By using ethylene vinyl alcohol polymers as a polar polymer barrier layer, a multilayer packaging film can be obtained, comprising exclusively polymers and/or co-polymers of ethylene. Such multilayer packaging films or packagings manufactured therefrom, can be recycled as a whole, in one go, together with other polyethylene waste streams, without necessitating an additional step in the recycling process to remove the non polyethylene containing components.

According to the invention, the polar polymer barrier layer is preferably an ethylene vinyl alcohol co-polymer, which preferably comprises 20 to 45 % by weight of ethylene, more preferably between 27 and 38 % by weight of ethylene. Examples of suitable ethylene vinyl alcohol polymers are Eval® (Kuraray Ltd) and Soarnol® (Nippon Goshei).

The polar polymer barrier layer preferably has a thickness between 10 and 50 µm.

The multilayer packaging film according to the invention may be manufactured in different ways, and is preferably manufactured by means of co-extrusion.

In the multilayer packaging films according to the invention, said layers are preferably adhered to each other by means of an adhesive, for example a polyethylene terminated with groups based on maleic acid anhydride, such as Bynel® (Dupont de Nemours) and Admer® (Mitsui). In this way, a further improvement of the adhesion of the individual layers is realised.

The invention also relates to tube-shaped packagings manufactured from a multilayer packaging film as described above.

The invention is further elucidated by means of the attached figures and example.

Figure 1 and figure 2 show a multilayer packaging film according to the invention, which is built up of three and five layers respectively.

Figure 3 shows a tube-shaped packaging manufactured from a packaging film according to the invention.

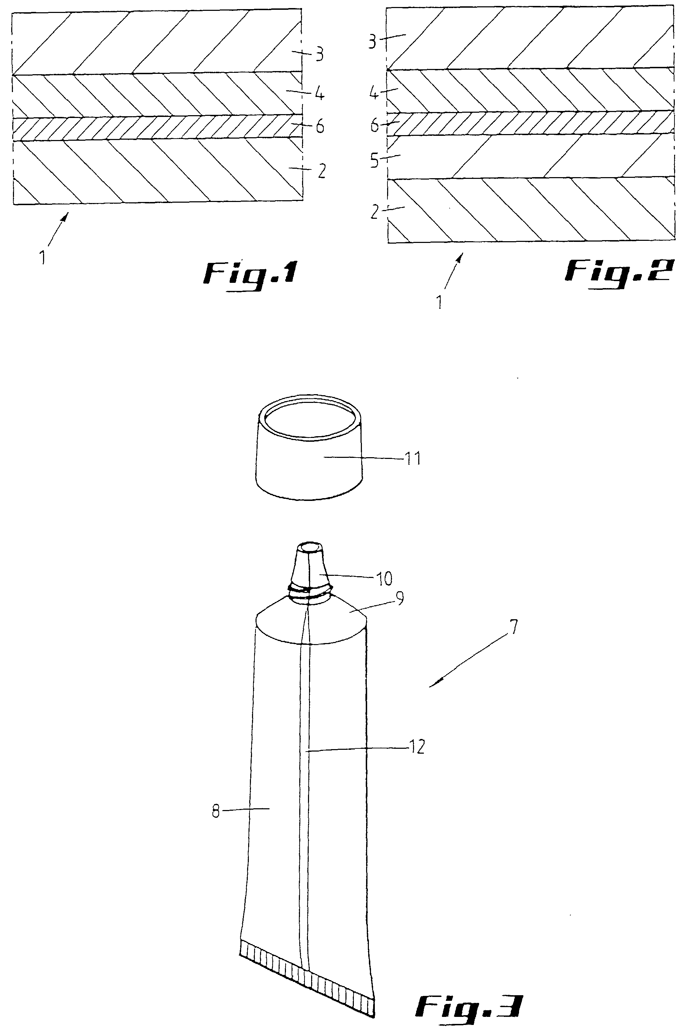

The multilayer packaging film 1 in figure 1 comprises an outer layer 2 and an inner layer 3, with a barrier layer 6 in between. Between the inner layer 3 and the barrier layer 6 preferably a fourth layer 4 is provided. This fourth layer 4 is preferably built up of medium or high density polyethylene. The inner and outer layers are preferably built up of LMDPE. The thickness of the inner layer is for example ca. 75 µm, the thickness of the outer layer is for example ca. 200 µm. The thickness of the barrier layer 6 is for example 10-50 µm.

The multilayer packaging film 1 in figure 2 comprises an outer layer 2 and an inner layer 3, with a barrier layer 6 in between. Between the outer layer 2 and the barrier layer 6 a fifth layer 5 is provided, which is preferably built up of MDPE and/or HDPE. The fifth layer 5 has for example a thickness of ca. 100 µm. Between the inner layer 3 and the barrier layer 6 preferably a fourth layer 4 is provided, which is preferably built up of MDPE and/or HDPE. The fourth layer 4 has for example a thickness of ca. 30 µm.

The tube-shaped packaging 7 shown in figure 3 comprises a tube body 8 for storing a packaged product, and an upper part 9 which comprises an outlet 10 for dispensing the packaged product, and a cap 11 for closing off the tube 7.

The tube 7 may at the outside be provided with a print, which is mostly applied previously to the outer layer 2.

In a possible process for manufacturing the tubes 7, the tube body 8 and the upper part 9 of the tube 7 are manufactured separately, and subsequently welded together. Also the caps 11 for the tubes 7 are manufactured separately.

Upon manufacturing the tube body 8, the co-extruded multilayer packaging film 1 is introduced into a device that is provided with a preform. This preform has the shape of the inside of a tube 7 and is provided with expansion hubs for the expansion of the multilayer packaging film 1 to the desired dimensions. An integrated guiding ensures that the rims 12 of the multilayer packaging film overlap. The rims 12 of the multilayer packaging film are welded together by means of a fully continuous heat welding system.

The tube-shaped multilayer packaging film is cut to size by means of a rotating knife, thus obtaining tubes 7 of the desired length. The obtained tubes are put on a compression mandrel.

The upper part 9 of the tube, or tube shoulder 9 is pressed in the right shape and desired dimensions in a separate press, and provided with a small quantity of moften multilayer packaging film . The compression mandrels provided with the tube body 8 are introduced into the press in which the tube shoulder 9 is pressed, and welded to the tube shoulder 9. The press is cooled, the tubes 7 are removed from the press, and transferred to a following device in which each tube is provided with a cap 11. Devices to manufacture such tubes are known by the trade name AISA. The semi-manufactured tubes are brought to a filling device and filled with the desired product through the bottom side 12 of the tube 7, the bottom side 12 subsequently being closed by welding.

### Example

A multilayer film was manufactured, built up of the following layers:
inner layer of linear medium density polyethylene
fourth intermediate layer of medium density polyethylene barrier layer
fifth intermediate layer of medium density polyethylene
outer layer of linear medium density polyethylene.

The overall thickness of the film amounted to 350 µm. The thickness of the fourth intermediate layer and outer layer amounted to 30 % of the overall thickness of the film. The polymer barrier layer, an ethylene vinyl alcohol co-polymer with 32 % by weight of ethylene was 7 % of the overall thickness. The thickness of the fifth intermediate layer and outer layer amounted to 63 % of the overall thickness of the film. The properties of this film are summarized in the table below.

**Table**

| Tensile strength at rupture¹ | | |
|---|---|---|
| in machine direction | ca. 16 MPa | |
| in cross direction | ca. 16 MPa | |

| Elongation at rupture² | | |
|---|---|---|
| in machine direction | ca. 360 % | |
| in cross direction | ca. 340 % | |

| Elasticity modulus³ | | |
|---|---|---|
| in machine direction | ca. 640 MPa | |
| in cross direction | ca. 590 MPa | |

| Oxygen permeability⁴ | | |
|---|---|---|
| at 20 °C, 50 % R.H. | 0.3 cc/cm² 24 h atm. | |

| Water vapour permeability⁵ | | |
|---|---|---|
| at 38 °C, 90 % R.H. | 0.9 g/cm² 24 h | |

| Friction coefficient⁶ | inner/inner layer | inner/outer layer |
|---|---|---|
| static | 0.45 | 0.56 |
| dynamic | 0.41 | 0.45 |

| Gloss value (60°)⁷ | | |
|---|---|---|
| inner layer | ca. 59 | |
| outer layer | ca. 68 | |

| | | |
|---|---|---|
| ¹ The tensile strength at rupture was determined by means of the ASTM D882-81 method. | | |
| ² The elongation at rupture was determined by means of the ASTM D882-81 method. | | |
| ³ The elasticity modulus was determined by means of the ASTM D882-81 method. | | |
| ⁴ The oxygen permeability was determined by means of the ASTM D3985-81 method. | | |
| ⁵ The water vapour permeability was determined by means of the ASTM E96 method. | | |
| ⁶ The friction coefficient was determined by means of the ISO 8295 method. | | |
| ⁷ The gloss value was determined by means of the ASTM D2457-70 method. | | |

## Claims

1. Multilayer packaging film comprising (i) a polyethylene outer layer, (ii) a polar polymer barrier layer, and (iii) a polyethylene inner layer, characterized in that the outer layer and inner layer are built up of linear medium density polyethylene.

2. Multilayer packaging film according to claim 1, characterized in that the multilayer packaging film comprises, between the inner layer and the polar polymer barrier layer, a fourth layer, which is built up of medium density polyethylene, whereby the thickness of the inner layer and fourth layer together amounts to 15-40 %, preferably 15-30 % of the overall thickness of the packaging film.

3. Multilayer packaging film according to claim 1, characterized in that the multilayer packaging film comprises, between the inner layer and the polar polymer barrier layer, a fourth layer, which is built up of high density polyethylene, whereby the thickness of the inner layer and fourth layer together amounts to 15-40 %, preferably 15-30 % of the overall thickness of the packaging film.

4. Multilayer packaging film according to claim 1 to 3, characterized in that the multilayer packaging film comprises, between the polar polymer barrier layer and the outer layer, a fifth layer, which is built up of medium density polyethylene, whereby the thickness of the outer layer and the fifth layer together amounts to 40-75 %, preferably 60-75 % of the overall thickness of the packaging film.

5. Multilayer packaging film according to claim 1 to 3, characterized in that the multilayer packaging film comprises, between the polar polymer barrier layer and the outer layer, a fifth layer, built up of high density polyethylene, whereby the thickness of the outer layer and the fifth layer together amounts to 40-75 %, preferably 60-75 % of the overall thickness of the packaging film.

6. Multilayer packaging film according to any one of claims 1 to 5, characterized in that the thickness of the packaging film is 180 to 400 µm.

7. Multilayer packaging film according to any one of claims 1 to 6, characterized in that the thickness of the packaging film is 250 to 360 µm.

8. Multilayer packaging film according to any one of claims 1 to 7, characterized in that the polar polymer barrier layer is built up of an ethylene vinyl alcohol co-polymer, comprising 20 to 45 % by weight of ethylene.

9. Tube-shaped packaging obtainable from a multilayer packaging film according to any one of claims 1 through 8.
